# EUROPEAN PATENT APPLICATION

(11) **EP 4 596 277 A1**
(43) Date of publication of application: **06.08.2025**
(21) Application number: 23862359.9
(22) Date of filing: 05.09.2023
(51) Int. Cl.: B60H 1/34, F24F 13/10, B60H 1/24

(54) **AIR OUTLET DEVICE AND AUTOMOBILE**

(30) Priority: 06.09.2022 CN 202211082545
(71) Applicant: Yanfeng International Automotive Technology Co., Ltd., Shanghai 201306 (CN)
(72) Inventor: TANG, Yucheng, Shanghai 201315 (CN); LUO, Yuwen, Shanghai 201315 (CN)
(74) Representative: Reitstötter Kinzebach
(86) International application number: PCT/CN2023/116884
(87) International publication number: WO 2024/051665

(57) **Abstract**

An air outlet device (3) and an automobile (1). The air outlet device (3) comprises: a housing (30), which comprises an air inlet (301) and an air outlet (302); and a blade string (31), the blade string (31) being arranged inside the housing (30) and extending in the length direction of the air outlet (302). The blade string (31) comprises a plurality of blade units (310) connected in series with each other, and the plurality of blade units (310) are adapted to rotate synchronously around the axis (313) of the blade string (31), or at least some of the blade units (310) independently rotate around the axis (313) of the blade string relative to the remaining blade units (310). A user can control all the blade units (310) to rotate synchronously around the axis (313), or can control a part of the blade units (310) to rotate, the remaining blade units (310) rotating in a delayed manner, thus achieving both controlling air outflow of the air outlet device (3) integrally and controlling air outflow of the air outlet device (3) in a segmented manner.

## Description

### Technical Field

The present application relates to the field of components of a vehicle air conditioner, and in particular to an air outlet device. The present application further relates to a vehicle including the air outlet device.

### Background

Vehicles are often equipped with air conditioning systems. The air conditioning system includes a plurality of air outlet devices respectively installed at different locations within the vehicle to direct airflow to various positions within the vehicle, thereby regulating the internal temperature of the vehicle. The air outlet device generally includes a housing with a long and narrow air outlet and a regulating mechanism provided in the housing, and the regulating mechanism is used to regulate the direction of the airflow.

In the prior art, the regulating mechanism can only regulate the airflow from the air outlet as a whole, but cannot regulate airflows from different sections of the air outlet respectively, which is not conducive to meeting personalized needs of passengers for the airflow.

### Summary

A first aspect of the present disclosure provides an air outlet device. The air outlet device includes a housing including an air inlet and an air outlet; and a vane assembly disposed inside the housing and extending along a length direction of the air outlet; the vane assembly includes a plurality of vane units connected in series with each other, and the plurality of vane units are adapted to rotate synchronously around an axis of the vane assembly, or at least some of the vane units rotate independently around the axis of the vane assembly relative to remaining vane units.

In an embodiment, each of the vane units includes a rotating shaft and at least one vane inclined relative to the rotating shaft.

In an embodiment, each of the vane units is integrally formed.

In an embodiment, the air outlet device further includes a first damper arranged between the vane unit at the tail end of the vane assembly and the housing, and friction force between the first damper and the housing is greater than transmission resistance between any two adjacent vane units.

In an embodiment, the axis of the vane assembly includes a straight section and/or a curved section.

In an embodiment, in the straight section, the rotating shafts of the plurality of vane units are connected in series and arranged collinearly.

In an embodiment, in the curved section, the rotating shafts of at least two vane units are connected to each other through a universal joint.

In an embodiment, the universal joint includes a ball socket formed on the rotating shaft of one of the two vane units and a ball head formed on the rotating shaft of the other of the two vane units, and the ball head is rotatably assembled in the ball socket.

In an embodiment, an inner wall of the ball socket is provided with two sliding grooves opposed to each other radially, and the ball head is provided with two guide rods opposed to each other radially; and wherein the guide rods are rotatably assembled in the corresponding sliding grooves respectively.

In an embodiment, the air outlet device further includes a plurality of second dampers, and each of the second dampers is disposed between the rotating shafts of two adjacent vane units, so that the plurality of vane units are adapted to rotate synchronously.

In an embodiment, the air outlet device further includes a motor, and the vane assembly is driven by the motor to rotate.

In an embodiment, the air outlet device further includes a plurality of clutch structures, and each of the clutch structures is connected between two adjacent vane units and is configured to have an engaged state and a disengaged state; and wherein when the clutch structure is in the engaged state, an upstream vane unit drives an adjacent downstream vane unit to rotate synchronously, and when the clutch structure is in the disengaged state, the upstream vane unit rotates independently relative to the adjacent downstream vane unit.

In an embodiment, each of the clutch structures includes a first engagement surface, a second engagement surface, a third engagement surface corresponding to the first engagement surface and a fourth engagement surface corresponding to the second engagement surface, and wherein in the engaged state, the first engagement surface and the third engagement surface are abutted against each other or the second engagement surface and the fourth engagement surface are abutted against each other, and in the disengaged state, the first engagement surface is spaced from the third engagement surface, and the second engagement surface is spaced from the fourth engagement surface.

In an embodiment, the first engagement surface and the second engagement surface are formed on the rotating shaft of one of the two adjacent vane units, and the third engagement surface and the fourth engagement surface are formed on the rotating shaft of the other of the two adjacent vane units.

In an embodiment, an end of the rotating shaft of one of the two adjacent vane units is provided with a pin shaft extending axially, a boss is configured on a circumferential side wall of the pin shaft, and two radial surfaces of the boss respectively form the first engagement surface and the second engagement surface; and wherein an end of the rotating shaft of the other of the two adjacent vane units is provided with an engagement groove matching with the pin shaft, a notch matching with the boss is configured on an inner wall of the engagement groove, and two radial surfaces of the notch respectively form the third engagement surface and the fourth engagement surface.

In an embodiment, a central angle corresponding to the notch is greater than a central angle corresponding to the boss.

In an embodiment, an air directing vane is provided at the air inlet of the housing, and the air directing vane extends along a length direction of the air inlet and is adapted to swing along a width direction of the air inlet.

In an embodiment, an air distribution plate is provided between the air outlet of the housing and the vane assembly, and the air distribution plate extends along the length direction of the air outlet and is spaced apart from the housing.

In an embodiment, the housing is provided with a plurality of air ducts arranged in parallel, and each of the air ducts is provided therein with the vane assembly.

A second aspect of the present disclosure provides an air outlet device. The air outlet device includes a housing including an air inlet and an air outlet; and a vane assembly disposed inside the housing and extending along a length direction of the air outlet; the vane assembly includes a plurality of vane units connected in series with each other. The plurality of vane units are adapted to rotate synchronously around the axis of the vane assembly, or at least some of the vane units rotate independently around the axis of the vane assembly relative to remaining vane units, so that the vane assembly is configured to have one or more of the following diversion states: a vanes-convergence state, a vanes-divergence state, and a vanes-forward diversion state.

In an embodiment, each of the vane units includes a rotating shaft and at least one vane inclined relative to the rotating shaft. The air outlet device is configured to include a first working mode in which the plurality of vane units are divided into at least two groups; the vane units of the same group are configured to have the vanes parallel to each other, and the vane units of two adjacent groups are configured to have the vanes not parallel to each other, so that the vane units of the two adjacent groups are adapted to be in the vanes-convergence state to provide converging airflow, in the vanes-divergence state to provide diverging airflow, or in the vanes-forward diversion state to provide forward blowing airflow.

In an embodiment, each of the vane units includes a rotating shaft and at least one vane inclined relative to the rotating shaft. The air outlet device is configured to include a second working mode in which adjacent vane units are configured so that normal directions of the vanes are different from each other, causing at least some of the plurality of vane units to be adapted to provide one of forward blowing airflow and obliquely blowing airflow, and at least some others of the plurality of vane units to be adapted to provide the other of the forward blowing airflow and the obliquely blowing airflow. In the vanes-convergence state, the obliquely blowing airflow and the adjacent forward blowing airflow are close to each other, and in the vanes-divergence state, the obliquely blowing airflow and the adjacent forward blowing airflow are away from each other.

In an embodiment, in the second working mode, the vane assembly includes a plurality of first groups of vane units providing the forward blowing airflow and a plurality of second groups of vane units providing the obliquely blowing airflow, and the first groups of vane units and the second groups of vane units are alternately distributed along the axis of the vane assembly.

A third aspect of the present disclosure provides a vehicle. The vehicle includes the air outlet device according to the above.

Compared with the prior art, the beneficial effects of the present application are as follows: the user is capable to control all the vane units to rotate synchronously around the axis, thereby regulating the airflows from the air outlet device as a whole. The user may also control some of the vane units to rotate firstly, and the remaining vane units to rotate with a delay, so as to regulate the airflows from different sections of the air outlet respectively. In this way, the air outlet device of the present application helps to meet personalized needs of passengers for the airflows, and also helps to improve passenger comfort.

### Brief Description of Drawings

The accompanying drawings described herein are used for providing a further understanding of the present application, and constitute a part of the present application. Exemplary embodiments of the present application and descriptions thereof are used for explaining the present application, and do not constitute any inappropriate limitation to the present application.
FIG. 1 schematically shows a vehicle according to an embodiment of the present application.
FIG. 2 schematically shows a location of an air outlet device within the vehicle.
FIG. 3 schematically shows a perspective view of the air outlet device of a first embodiment.
FIG. 4 schematically shows an exploded view of the air outlet device of the first embodiment.
FIG. 5 schematically shows a structure of a driven vane unit from a first perspective.
FIG. 6 schematically shows the structure of the driven vane unit shown in FIG. 5 from a second perspective.
FIG. 7 is a side view of the driven vane unit shown in FIG. 5.
FIG. 8 is a view of the driven vane unit shown in FIG. 5 in direction A.
FIG. 9 is a view of the driven vane unit shown in FIG. 5 in direction B.
FIG. 10A schematically shows a notch of a second transition vane unit.
FIG. 10B schematically shows an overall structure of a first transition vane unit.
FIG. 11 schematically shows an internal structure of the air outlet device of the first embodiment.
FIG. 12a schematically shows an initial state of the air outlet device of the first embodiment.
FIG. 12b schematically shows a state of a clutch structure between the first transition vane unit and the second transition vane unit in FIG. 12a.
FIG. 12c schematically shows a state of the clutch structure between the active vane unit and the driven vane unit in FIG. 12a.
FIG. 13a schematically shows the air outlet device in the first working mode of the first embodiment, wherein the vane assembly is in a vanes-convergence state.
FIG. 13b schematically shows a state of the clutch structure between the first transition vane unit and the second transition vane unit in FIG. 13a.
FIG. 13c schematically shows a state of the clutch structure between the active vane unit and the driven vane unit in FIG. 13a.
FIG. 14a schematically shows the air outlet device in the first working mode of the first embodiment, wherein the vane assembly is in a vanes-forward diversion state.
FIG. 14b schematically shows a state of the clutch structure between the first transition vane unit and the second transition vane unit in FIG. 14a.
FIG. 14c schematically shows a state of the clutch structure between the active vane unit and the driven vane unit in FIG. 14a.
FIG. 15a schematically shows the air outlet device in the first working mode of the first embodiment, wherein the vane assembly is in a vanes-divergence state.
FIG. 15b schematically shows a state of the clutch structure between the first transition vane unit and the second transition vane unit in FIG. 15a.
FIG. 15c schematically shows a state of the clutch structure between the active vane unit and the driven vane unit in FIG. 15a.
FIG. 16a schematically shows an instantaneous state during rotation of the vane assembly of the air outlet device in the second working mode of the first embodiment.
FIG. 16b schematically shows a state of the clutch structure between the first transition vane unit and the second transition vane unit in FIG. 16a.
FIG. 16c schematically shows a state of the clutch structure between the active vane unit and the driven vane unit in FIG. 16a.
FIG. 17a schematically shows another different instantaneous state during the rotation of the vane assembly of the air outlet device in the second working mode of the first embodiment.
FIG. 17b schematically shows a state of the clutch structure between the first transition vane unit and the second transition vane unit in FIG. 17a.
FIG. 17c schematically shows a state of the clutch structure between the active vane unit and the driven vane unit in FIG. 17a.
FIG. 18a schematically shows another different instantaneous state during the rotation of the vane assembly of the air outlet device in the second working mode of the first embodiment.
FIG. 18b schematically shows a state of the clutch structure between the first transition vane unit and the second transition vane unit in FIG. 18a.
FIG. 18c schematically shows a state of the clutch structure between the active vane unit and the driven vane unit in FIG. 18a.
FIG. 19a schematically shows another different instantaneous state during the rotation of the vane assembly of the air outlet device in the second working mode of the first embodiment.
FIG. 19b schematically shows a state of the clutch structure between the first transition vane unit and the second transition vane unit in FIG. 19a.
FIG. 19c schematically shows a state of the clutch structure between the active vane unit and the driven vane unit in FIG. 19a.
FIG. 20a schematically shows another different instantaneous state during the rotation of the vane assembly of the air outlet device in the second working mode of the first embodiment.
FIG. 20b schematically shows a state of the clutch structure between the first transition vane unit and the second transition vane unit in FIG. 20a.
FIG. 20c schematically shows a state of the clutch structure between the active vane unit and the driven vane unit in FIG. 20a.
FIG. 21a schematically shows another different instantaneous state during the rotation of the vane assembly of the air outlet device in the second working mode of the first embodiment.
FIG. 21b schematically shows a state of the clutch structure between the first transition vane unit and the second transition vane unit in FIG. 21a.
FIG. 21c schematically shows a state of the clutch structure between the active vane unit and the driven vane unit in FIG. 21a.
FIG. 22a, FIG. 22b and FIG. 22c schematically show working principle of an air directing vane at the air inlet.
FIG. 23 schematically shows an air outlet device of a second embodiment, wherein two adjacent vane units are connected by a universal joint.
FIG. 24 schematically shows an exploded view of the universal joint.
FIG. 25 schematically shows a cross-sectional view of the universal joint.
FIG. 26 schematically shows an instantaneous state during rotation of a vane assembly of an air outlet device of a third embodiment.
FIG. 27 schematically shows a vane unit of an air outlet device of a fourth embodiment, wherein a second damper is provided on the rotating shaft of the vane unit.
FIG. 28 schematically shows a side view of the air outlet device of the fourth embodiment.
FIG. 29 schematically shows an instantaneous state during rotation of the vane assembly of the air outlet device of the fourth embodiment.
FIG. 30 schematically shows a cross-sectional view of an air outlet device of a fifth embodiment.

### Detailed Description

In order to make the objectives, technical solutions and advantages of the present disclosure clearer, the technical solutions of the present disclosure are clearly and completely described below with reference to specific embodiments of the present disclosure and corresponding drawings. Obviously, the described embodiments are only a part of the embodiments of the present disclosure, rather than all of the embodiments. All other embodiments obtained by a person of ordinary skill in the art based on the embodiments of the present disclosure without creative efforts shall fall within the protection scope of the present disclosure.

It should be understood that, in the present disclosure, the term "transverse direction" refers to a direction substantially perpendicular to an axial direction of a rod-shaped member. The term "upstream" describes a direction toward a motor in a transmission relationship of the vane assembly, and the term "downstream" describes a direction opposite to the direction described by the term "upstream." The term "normal direction of a vane" refers to a direction generally perpendicular to the vane.

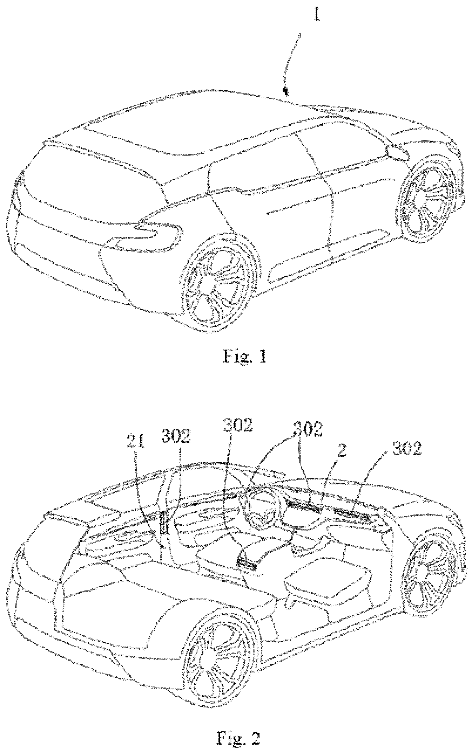

As shown in FIGS. 1 and 2, a plurality of air outlet devices are provided on the instrument cover 2 of the vehicle 1. An air conditioning system (not shown) is also disposed inside the vehicle 1. The air outlet devices are connected to the air conditioning system and are used to regulate the direction of airflow from the air conditioning system, so as to improve passenger comfort. The air outlet devices may also be arranged at other locations within the vehicle, for example, at the column 21, which is not described in detail herein.

The air outlet device is described below.

### First Embodiment

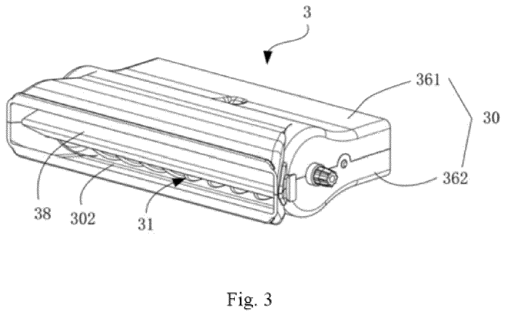

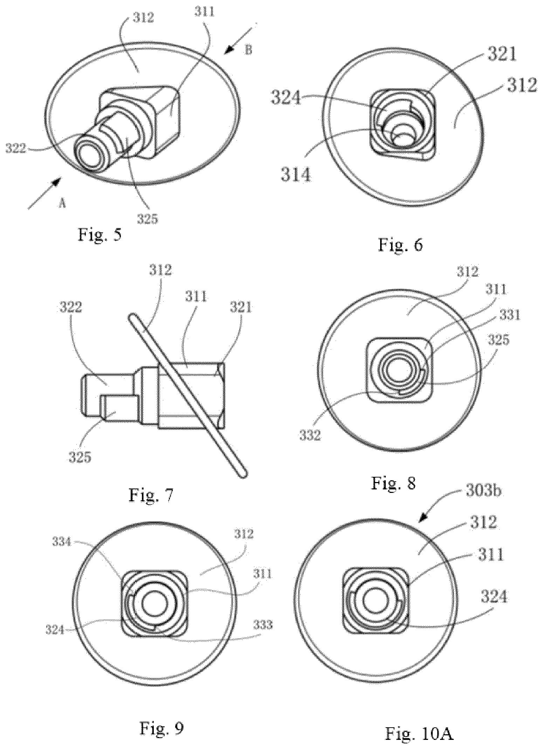

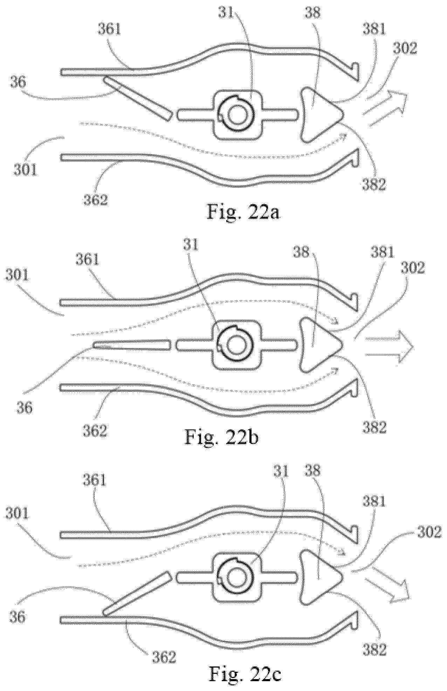

As shown in FIG. 3, the air outlet device 3 of the first embodiment includes a housing 30 and a vane assembly 31 disposed in the housing 30. The housing 30 is provided with an air inlet 301 (as shown in FIGS. 22a, 22b and 22c) for allowing air to flow into the housing and an air outlet 302 for allowing air to flow out of the housing. The vane assembly 31 is formed by a plurality of vane units 310 connected in series and extends along the length direction of the air outlet 302. Each of the vane units 310 includes a rotating shaft 311 and at least one vane 312 inclined relative to the rotating shaft 311 (as shown in FIG. 5). The rotating shafts 311 of the vane units 310 are sequentially connected in series such that the plurality of vane units 310 form the vane assembly 31. Therefore, the connection line of these rotating shafts 311 forms the axis 313 of the vane assembly 31. When the air outlet device 3 is used, these vane units 310 are configured to rotate synchronously around the axis 313 of the vane assembly 31, or at least some of the vane units rotate independently around the axis 313 of the vane assembly 31 relative to the remaining vane units.

According to the air outlet device 3, when all the vane units 310 are controlled to synchronously rotate around the axis 313 by the user, the airflows from the air outlet device 3 are regulated as a whole. When some of the vane units 310 are controlled to rotate, and the remaining vane units 310 are controlled to rotate with a delay or remain stationary by the user, it is achieved that the airflows from different sections of the air outlet device 3 are regulated respectively. This helps meet personalized needs of passengers for the airflows, and also helps improve passenger comfort.

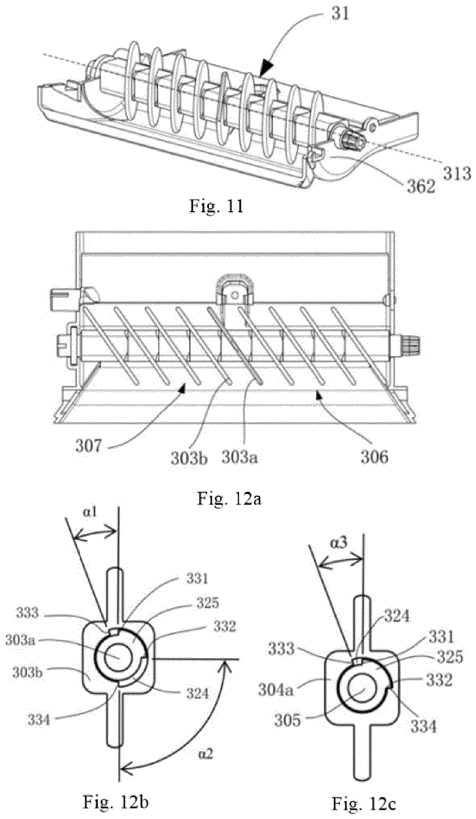

As shown in FIGS. 3 and 11, in the air outlet device 3 of the first embodiment, the axis 313 of the vane assembly 31 is a straight line. The air outlet 302 is generally in a long and narrow shape, that is, the length of the air outlet 302 is much larger than the width. This facilitates the arrangement of the vane assembly 31 along the length direction of the air outlet 302. In other embodiments, an axis of the vane assembly may also be a curved line or a zigzag line, which will be described below.

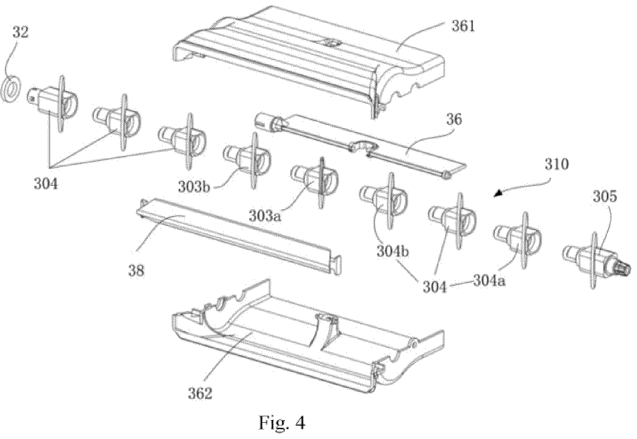

Optionally, the housing 30 is formed by cooperating the upper housing 361 and the lower housing 362 (as shown in FIGS. 3 and 4). This facilitates the arrangement of components such as the vane assembly 31, the air directing vane 36 (as shown in FIG. 4) and the air distribution plate 38 (as shown in FIG. 4) in the housing 30.

Optionally, the air outlet device 3 further includes a motor (not shown) to drive the vane assembly 31 to rotate. Optionally, the motor is connected to the vane unit at the starting end of the vane assembly 31, and thereby sequentially drives all the vane units 310 to rotate. In this way, the driver and/or passenger does not need to manually adjust the vane assembly 31, but only needs to control the motor, which is convenient for use. Of course, in other embodiments, the motor may also be replaced with a manual wheel, so that the vane assembly 31 can also be manually adjusted by the driver and/or passenger. It should also be understood that a transmission assembly may also be provided between the motor and the vane assembly 31, so that the motor can also drive the vane assembly 31 to rotate even when the motor and the vane assembly 31 are arranged separately. Here, the vane unit connected to the motor forms an active vane unit 305.

Optionally, the motor may be located inside the housing 30 or outside the housing 30, as long as the motor can successfully drive the vane assembly 31 to rotate. The mounting structure of the motor can be easily obtained by those skilled in the art according to actual conditions, and will not be described in detail here.

As shown in FIG. 4, the vane units 310 may include the active vane unit 305 (as described above), driven vane units 304, and optionally transition vane units. In the embodiment shown in FIG. 4, the transition vane units include a first transition vane unit 303a located upstream and a second transition vane unit 303b located downstream and adjacent to the first transition vane unit 303a. The two transition vane units 303a, 303b are adjacently disposed in the middle of the vane assembly 31.

FIG. 5 schematically shows a structure of a driven vane unit 304. FIGS. 6 to 9 show the driven vane unit 304 from other perspectives. As shown in FIGS. 5 to 9, the driven vane unit 304 includes a rotating shaft 311 and a vane 312 inclined relative to the rotating shaft 311. Optionally, the driven vane unit 304 is integrally formed.

The first end 321 of the rotating shaft 311 is provided with an engagement groove 314, and a notch 324 is provided on the side wall of the engagement groove 314. The second end 322 is provided as a pin shaft extending axially outward, and a boss 325 is provided on the circumferential side wall of the pin shaft. During assembly, the pin shaft of the vane unit located upstream of and adjacently to the driven vane unit 304 is inserted into the engagement groove 314 and the boss of the adjacent upstream vane unit is engaged into the notch 324. Meanwhile, the pin shaft of the driven vane unit 304 is inserted into the engagement groove of the adjacent downstream vane unit and the boss 325 is engaged into the notch of the downstream vane unit. In this way, the plurality of vane units 310 are connected in series to form the vane assembly 31. The boss 325 and the corresponding notch form a clutch structure connected between two adjacent vane units 310.

The structure of the active vane unit 305 is similar to that of the driven vane unit 304 shown in FIG. 5, the only difference is that the first end of the active vane unit 305 is adapted to be connected with the motor. This is easily understood by a person skilled in the art, and is not described in detail herein again.

As also shown in FIGS. 8 and 9, the two radial surfaces of the boss 325 form a first engagement surface 331 and a second engagement surface 332, respectively, and the two radial surfaces of the notch 324 form a third engagement surface 333 and a fourth engagement surface 334, respectively. In the state where these vane units 310 are assembled together, the first engagement surface 331 of the boss 325 corresponds to the third engagement surface 333 of the corresponding notch, and the second engagement surface 332 of the boss 325 corresponds to the corresponding fourth engagement surface 334 (as shown in FIG. 12c). The central angle corresponding to the notch 324 is greater than the central angle corresponding to the boss 325. In other words, the circumferential distance between the first engagement surface 331 and the second engagement surface 332 is less than the circumferential distance between the third engagement surface 333 and the second engagement surface 334. The same is true for the bosses and notches (if any) of other vane units 310. For example, in the driven vane unit 304, the central angle corresponding to the notch 324 (i.e., the angle between the third engagement surface 333 and the fourth engagement surface 334) is 110 degrees, and the central angle corresponding to the boss 325 (i.e., the angle between the first engagement surface 331 and the second engagement surface 332) is 90 degrees.

Because the central angle corresponding to the notch 324 is greater than the central angle corresponding to the boss 325, in the vane assembly 31, there is a first idle angle (for example, the first idle angle is 20 degrees) between adjacent vane units 310. An upstream driven vane unit 304 is able to rotate independently relative to an adjacent downstream driven vane unit 304 by means of the first idle angle, so that the clutch structure has an engaged state and a disengaged state. In the engaged state of the clutch structure, the first engagement surface 331 and the third engagement surface 333 are abutted against each other, so that the first engagement surface 331 pushes the third engagement surface 333, or the second engagement surface 332 and the fourth engagement surface 334 are abutted against each other, so that the second engagement surface 332 pushes the fourth engagement surface 334, thereby achieving that the upstream vane unit drives the downstream vane unit to rotate synchronously. In the disengaged state of the clutch structure, the first engagement surface 331 is spaced from the third engagement surface 333, and the second engagement surface 332 is spaced from the fourth engagement surface 334, thereby achieving that the upstream vane unit rotates independently relative to the downstream vane unit. It should be understood that those skilled in the art may also configure the central angle corresponding to the notch 324 and the central angle corresponding to the boss 325 to other angles respectively, as long as the function of the clutch structure can be achieved, which will not be described here.

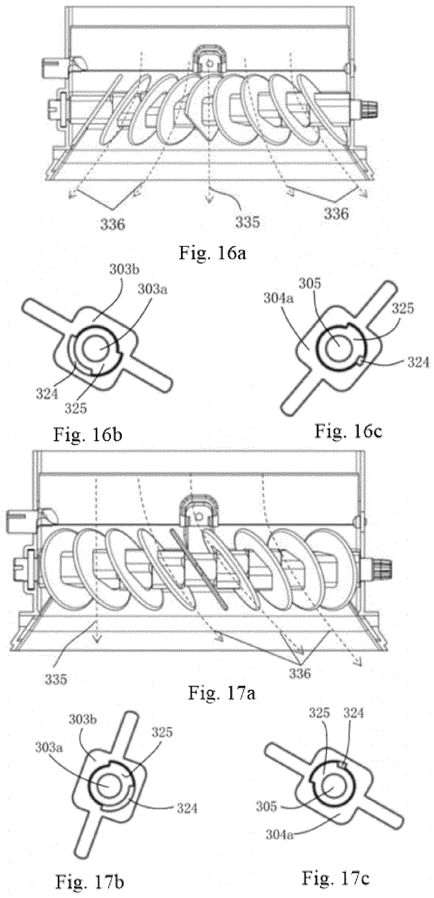

Since the first idle angle exists between adjacent vane units 310 and each of the vanes 312 is inclined relative to the corresponding rotating shaft 311, during the active vane unit 305 sequentially driving the driven vane units 304 to rotate in a second rotation direction one by one, these vane units 310 may be arranged such that the normal directions of the adjacent vanes 312 are different from each other. Thereby at least some of the plurality of vane units 310 are adapted to provide one of forward blowing airflow 335 and obliquely blowing airflow 336, and at least the others of the plurality of vane units 310 are adapted to provide the other of the forward blowing airflow 335 and the obliquely blowing airflow 336 (as shown in FIGS. 16a, 17a, 18a, 19a, 20a and 21a). This forms a second working mode of the air outlet device 3. In the second working mode, when the forward blowing airflow 335 and the obliquely blowing airflow 336 are close to each other, and the diversion state of the vane assembly 31 is a vanes-convergence state, and when the forward blowing airflow 335 and the obliquely blowing airflow 336 are away from each other, the diversion state of the vane assembly 31 is a vanes-divergence state. In addition, in the second working mode, as the vane assembly 31 rotates, the vane units providing the forward blowing airflow 335 and the vane units providing the obliquely blowing airflow 336 are shifted periodically along the axial direction of the vane assembly 31, and thus the vanes-convergence state and the vanes-divergence state of the vane assembly 31 are also periodically switched.

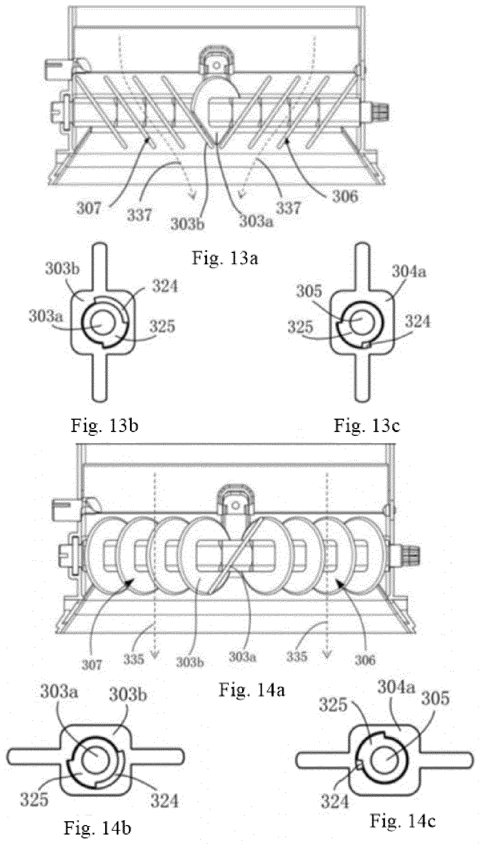

The structures of the first transition vane unit 303a and the second transition vane unit 303b are similar to the structure of the driven vane unit shown in FIG. 5. For simplicity, only the differences are described herein. As shown in FIG. 10A, the angle of the central angle corresponding to the notch 324 of the second transition vane unit 303b is greater than the angle of the central angle corresponding to the notch 324 of the driven vane unit 304, and the same is true for the notch 324 of the first transition vane unit 303a. Therefore, when the vane assembly 31 rotates, a second idle angle exists between the first transition vane unit 303a and the adjacent upstream driven vane unit 304b and also exists between the first transition vane unit 303a and the second transition vane unit 303b. The degree of the second idle angle is greater than the degree of the first idle angle. For example, the central angle corresponding to the notch 324 of the first transition vane unit 303a is 200 degrees, the central angle corresponding to the boss 325 of the first transition vane unit 303a is 90 degrees, and the central angle corresponding to the notch 324 of the second transition vane unit 303b is also 200 degrees. Thus the maximum degree of the second idle angle may be 110 degrees (of course, if the boss is arranged in the notch such that the two radial edges of the boss are spaced apart from the two radial edges of the notch respectively, the degree of the second idle angle is less than 110 degrees). It should be noted that, in this case, the central angle corresponding to the boss 325 of the second transition vane unit 303b is the same as the central angle corresponding to the boss 325 of each of other driven vane units 304 (for example, both are 90 degrees). In this way, when the vane assembly 31 is configured to rotate in a first rotation direction opposite to the second rotation direction, the plurality of driven vane units 304 upstream of the first transition vane unit 303a form a first group 306 of vane units, and the second transition vane unit 303b, together with the plurality of driven vane units 304 downstream thereof, forms a second group 307 of vane units. Vanes of vane units of the same group are parallel to each other and rotate synchronously, and vanes of vane units of different groups are not parallel to each other. As such, the two groups 306, 307 of vane units can be configured to provide one of converging airflow 337, diverging airflow 338, and forward blowing airflow 335 (as shown in FIGS. 13a, 14a, and 15a). When the vane assembly 31 is in the vanes-convergence state, the two groups 306, 307 of vane units provide the converging airflow 337. When the vane assembly 31 is in the vanes-divergence state, the two groups 306, 307 of vane units provide the diverging airflow 338. When the vane assembly 31 is in the vanes-forward diversion state, the two groups 306, 307 of vane units provide the forward blowing airflow 335. This forms a first working mode of the air outlet device 3, which will be described in detail below. In addition, in this first working mode, the vanes-convergence state, the vanes-divergence state, and the vanes-forward diversion state of the vane assembly 31 are also periodically switched.

It should be noted that the central angles corresponding to the notches and the central angles corresponding to the bosses may also be set to other degrees according to actual situations. This is easily implemented by those skilled in the art and will not be described here. For example, the notch of the first transition vane unit 303a may also be configured such that the first transition vane unit 303a has a maximum idle angle of 180 degrees in the first rotational direction. **In** this way, the second transition vane unit 303b can be omitted to simplify the structure of the air outlet device 3, but the first working mode of the air outlet device 3 can still be achieved, which will not be described here.

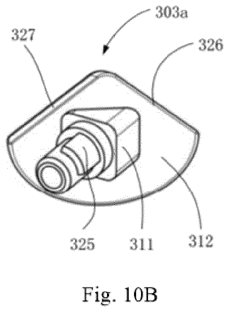

Optionally, in order to prevent the vane 312 of the first transition vane unit 303a from interfering with adjacent vane units during rotation, the vane 312 of the first transition vane unit 303a may be configured in a substantial fan-shape (as shown in FIG. 10B). The first radial edge 326 of the fan-shape vane is adapted to contact the vane of the adjacent upstream vane unit, and the second radial edge 327 is adapted to contact the vane of the adjacent downstream vane unit. It should be understood that when spaces between the vane units are relatively large and/or inclination angles of the vanes are relatively small, it is unnecessary to configure the vane 312 of the first transition vane unit 303a into a substantial fan-shape.

The working process of the air outlet device 3 will be described below with reference to FIGS. 12a to 21c.

First, the first working mode of the air outlet device 3 is described.

FIG. 12a shows an initial state of the vane assembly 31 of the air outlet device 3. **In** the initial state, the vanes 312 of the vane units 310 are parallel to each other and inclined with respect to the axis 313 of the vane assembly 31.

FIG. 12b shows the state of the clutch structure between the first transition vane unit 303a and the second transition vane unit 303b. In the initial state, the boss 325 of the first transition vane unit 303a is in the notch 324 of the second transition vane unit 303b. The first engagement surface 331 and the third engagement surface 333 are spaced by a first angle α1 of 20 degrees, and the second engagement surface 332 and the fourth engagement surface 334 are spaced by a second angle α2 of 90 degrees, so that the clutch structure between the first transition vane unit 303a and the second transition vane unit 303b is in a disengaged state. In addition, the state of the clutch structure between the first transition vane unit 303a and the adjacent upstream driven vane unit is the same as that in FIG. 12b, and will not be repeated here.

As shown in FIG. 12c, in the initial state, the boss 325 of the active vane unit 305 is engaged in the notch 324 of the adjacent downstream driven vane unit 304a. The first engagement surface 331 and the third engagement surface 333 are spaced by a third angle α3 of 20 degrees, and the second engagement surface 332 and the fourth engagement surface 334 are abutted against each other, so that the clutch structure between the active vane unit 305 and the adjacent downstream driven vane unit 304a is in an engaged state in the first rotation direction (e.g., clockwise direction). In addition, the states of the clutch structures between the remaining driven vane units and the state of the clutch structure between the second transition vane unit 303b and the adjacent downstream driven vane unit are the same as that in FIG. 12c, and will not be repeated here.

In this way, the state of the clutch structure between the first transition vane unit 303a and the second transition vane unit 303b is different from the state of the clutch structure between the second transition vane unit 303b and the adjacent downstream vane unit. Thus based on the difference between the states of the two clutch structures, the plurality of driven vane units upstream of the first transition vane unit 303a form the first group 306 of vane units, and the second transition vane unit 303b, together with the driven vane units downstream thereof, forms the second group 307 of vane units.

Starting from the initial state, the active vane unit 305 rotates in the first rotation direction, so that the air outlet device 3 is in the first working mode. As shown in FIG. 13c, the active vane unit 305 rotates about 180 degrees clockwise and pushes the first group 306 of vane units to rotate about 180 degrees. Correspondingly, as shown in FIG. 13b, in the clutch structure between the first transition vane unit 303a and the second transition vane unit 303b, the second engagement surface 332 and the fourth engagement surface 334 are also switched from a spaced state to an abutted state. Since the first transition vane unit 303a absorbs an idle angle of 90 degrees in the first rotation direction, the first transition vane unit 303a thereby rotates about 90 degrees in the first rotation direction, and the second group 307 of vane units (including the second transition vane unit 303b) has not rotated yet. Thus, as shown in FIG. 13a, from the overall view of the vane assembly 31, the first group 306 of vane units and the second group 307 of vane units provide the converging airflow 337, and the vane assembly 31 is in the vanes-convergence state.

Next, as shown in FIG. 14c, the active vane unit 305 further rotates about 90 degrees clockwise and pushes the first group 306 of vane units to further rotate about 90 degrees synchronously. Accordingly, as shown in FIG. 14b, the first transition vane unit 303a pushes the second transition vane unit 303b, and thereby pushes the second group 307 of vane units to rotate clockwise by about 90 degrees synchronously. Thus, as shown in FIG. 14a, from the overall view of the vane assembly 31, the first group 306 of vane units and the second group 307 of vane units provide the forward blowing airflow 335, and the vane assembly 31 is in the vanes-forward diversion state.

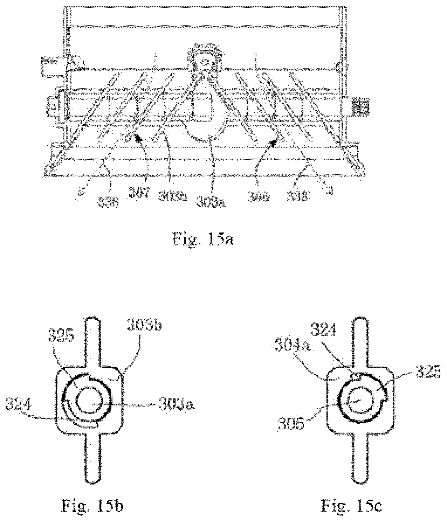

Next, as shown in FIG. 15c, the active vane unit 305 further rotates about 90 degrees clockwise and pushes the first group 306 of vane units to further rotate about 90 degrees synchronously. Accordingly, as shown in FIG. 15b, the first transition vane unit 303a pushes the second transition vane unit 303b, and thereby pushes the second group 307 of vane units to rotate clockwise by about 90 degrees synchronously. Thus, as shown in FIG. 15a, from the overall view of the vane assembly 31, the first group 306 of vane units and the second group 307 of vane units provide the diverging airflow 338, and the vane assembly 31 is in the vanes-divergence state.

As the active vane unit 305 continues to rotate in the first rotation direction, the vane assembly 31 then cyclically presents the diversion states shown in FIG. 13a, FIG. 14a, and FIG. 15a, which will not be repeated here.

Next, a second working mode of the air outlet device 3 is described.

Starting from the initial state, the active vane unit 305 rotates in the second rotation direction (for example, counterclockwise), so that the air outlet device 3 can be in the second working mode. As shown in FIG. 16c, the active vane unit 305 rotates 20 degrees counterclockwise, so that the first engagement surface 331 abuts against the third engagement surface 333 (i.e., the third angle α3 is eliminated), and the second engagement surface 332 is spaced from the fourth engagement surface 334. Then, the active vane unit 305 continues to rotate in the second rotation direction until the first engagement surfaces 331 in all the clutch structures respectively abut against the corresponding third engagement surfaces 333 (i.e., all the first angles α1 are eliminated) in the second rotation direction. FIG. 16b schematically shows the state of the clutch structure between the first transition vane unit 303a and the second transition vane unit 303b (the clutch structure is in the engaged state in the second rotation direction). In this way, each vane unit is rotated by an angle of 20 degrees with respect to the adjacent vane unit, which makes the normal directions of the vanes of the adjacent vane units 310 different from each other, and thus the vane units 310 guide the airflows in different directions from each other. For example, as shown in FIG. 16a, the first transition vane unit 303a guides the airflow to blow forward to form the forward blowing airflow 335, and the vane units on both sides of the first transition vane unit 303a respectively guide the airflow to blow obliquely and away from the forward blowing airflow 335 to form the obliquely blowing airflow 336 that is away from the forward blowing airflow 335. For example, some vane units near the starting end (i.e., the active vane unit 305) of the vane assembly 31 guide the airflow to blow toward the right, and some vane units near the tail end of the vane assembly 31 guide the airflow to blow toward the left. At this time, the vane assembly 31 is in the vanes-divergence state.

Next, as shown in FIG. 17c, the active vane unit 305 continues to rotate 90 degrees counterclockwise. Since none of the clutch structures now has the first angle α1, the vane assembly 31 rotates 90 degrees as a whole in the second rotation direction (as shown in FIG. 17b). Thus, as shown in FIG. 17a, from the overall view of the vane assembly 31, some vane units near the tail end of the vane assembly 31 provide the forward blowing airflow 335, and the remaining vane units provide the obliquely blowing airflow 336 away from the forward blowing airflow 335. At this time, the vane assembly 31 is still in the vanes-divergence state.

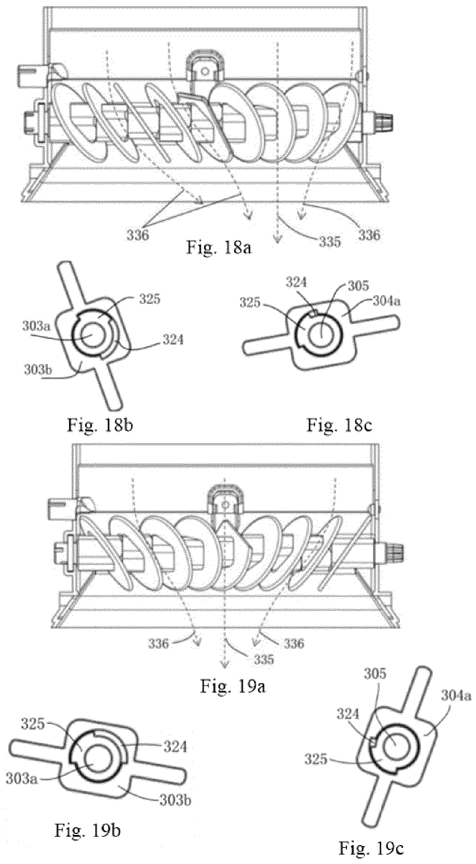

Next, as shown in FIG. 18c, the active vane unit 305 continues to rotate 40 degrees in the second rotation direction. Correspondingly, the entire vane assembly 31 also rotates 40 degrees synchronously in the second rotation direction (as shown in FIG. 18b). Thus, as shown in FIG. 18a, from the overall view of the vane assembly 31, some vane units of the vane assembly 31 provide the forward blowing airflow 335, and the remaining vane units provide the obliquely blowing airflow 336 close to the forward blowing airflow 335. At this time, the vane assembly 31 is in the vanes-convergence state.

Next, as shown in FIG. 19c, the active vane unit 305 continues to rotate 60 degrees in the second rotation direction. Correspondingly, the entire vane assembly 31 also rotates 60 degrees synchronously in the second rotation direction (as shown in FIG. 19b). Thus, as shown in FIG. 19a, from the overall view of the vane assembly 31, some vane units of the vane assembly 31 provide the forward blowing airflow 335, and the remaining vane units provide the obliquely blowing airflow 336 close to the forward blowing airflow 335. At this time, the vane assembly 31 is in the vanes-convergence state. Compared to that shown in FIG. 18a, the forward blowing airflow 335 in FIG. 19a is shifted toward the tail end of the vane assembly 31.

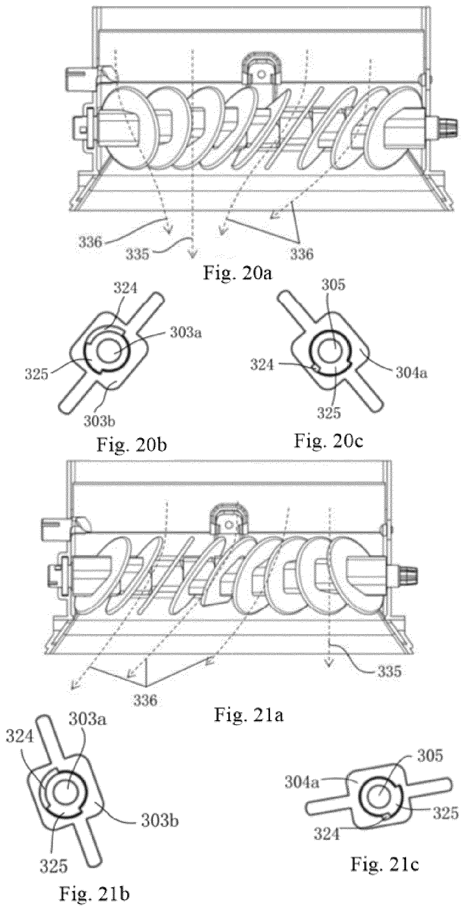

Next, as shown in FIG. 20c, the active vane unit 305 continues to rotate 60 degrees in the second rotation direction. Correspondingly, the entire vane assembly 31 also rotates 60 degrees synchronously in the second rotation direction (as shown in FIG. 20b). Thus, as shown in FIG. 20a, from the overall view of the vane assembly 31, some vane units of the vane assembly 31 provide the forward blowing airflow 335, and the remaining vane units provide the obliquely blowing airflow 336 close to the forward blowing airflow 335. At this time, the vane assembly 31 is in the vanes-convergence state. Compared to that shown in FIG. 19a, the forward blowing airflow 335 in FIG. 20a is further shifted toward the tail end of the vane assembly 31.

Next, as shown in FIG. 21c, the active vane unit 305 continues to rotate 60 degrees in the second rotation direction. Correspondingly, the entire vane assembly 31 also rotates 60 degrees synchronously in the second rotation direction (as shown in FIG. 21b). Thus, as shown in FIG. 21a, from the overall view of the vane assembly 31, some vane units near the starting end of the vane assembly 31 provide the forward blowing airflow 335, and the remaining vane units provide the obliquely blowing airflow 336 away from the forward blowing airflow 335. At this time, the vane assembly 31 is in the vanes-divergence state.

As the active vane unit 305 continues to rotate, the vane assembly 31 then cyclically presents the diversion states shown in FIG. 16a, FIG. 17a, FIG. 18a, FIG. 19a, FIG. 20a and FIG. 21a, which is not described in detail here.

It can be seen from the above description that the air outlet device 3 according to the first embodiment of the present application can not only work in the second working mode, but also work in the first working mode, and the two working modes can be conveniently switched by switching the rotation direction of the motor, which facilitates the user to select a working mode of the air outlet device 3 according to actual needs. It should also be understood that the vane assembly 31 may also be stopped from rotating (for example, the motor is stopped from rotating or the vane assembly 31 is disconnected from the motor), so that the air outlet device 3 is fixed in a specific airflow state. Different idle angles may also be configured in the clutch structures in the first rotation direction and in the second rotation direction according to requirements, so as to obtain a combination of more different airflow states.

Optionally, as further shown in FIG. 4, the air outlet device 3 further includes a first damper 32 disposed between the vane unit 310 at the tail end of the vane assembly 31 and the housing 30. The friction force between the first damper 32 and the housing 30 is greater than the transmission resistance between any two adjacent vane units 310. In this way, when the air outlet device 3 works, the event that diversion states of some vane units is kept unchanged and cannot be switched due to large transmission resistance between two vane units 310 can be avoided.

As also shown in FIG. 4, an air directing vane 36 is provided at the air inlet 301 of the air outlet device 3. The air directing vane 36 extends along the length direction of the air inlet 301 and is adapted to swing along the width direction of the air inlet 301 to drive air to flow through one or both sides, in the radial direction, of the vane assembly 31, thereby enabling further adjustment of the directions of the airflows from the air outlet device 3 and further improvement of the comfort of the vehicle 1. For example, as shown in FIG. 22a, the air directing vane 36 swings to be in contact with the upper housing 361, and the air flows through the lower side, in the radial direction, of the vane assembly 31 (as shown by the arrow in FIG. 22a). As shown in FIG. 22b, the air directing vane 36 swings to be parallel to the upper housing 361 and the lower housing 362, and the air flows through both sides, in the radial direction, of the vane assembly 31 (as shown by the arrows in FIG. 22b). As shown in FIG. 22c, the air directing vane 36 swings to be in contact with the lower housing 362, and the air flows through the upper side, in the radial direction, of the vane assembly 31 (as shown by the arrow in FIG. 22c).

As also shown in FIGS. 4 and 5, an air distribution plate 38 is provided within the housing 30 and between the vane assembly 31 and the air outlet 302. The air distribution plate 38 extends in a length direction of the air outlet 302 and is spaced apart from the housing 30. The air distribution plate 38 has two guiding surfaces respectively corresponding to the both sides, in the radial direction, of the vane assembly 31, that is, a first guiding surface 381 corresponding to the upper housing 361 and a second guiding surface 382 corresponding to the lower housing 362. For example, in this embodiment, the cross section of the air distribution plate 38 is substantially triangular. Of course, the cross-sectional shape of the air distribution plate 38 may also be configured into other shapes matching with the shape of the housing 30, as long as it is ensured that air channels with uniform widths are respectively formed between the air distribution plate 38 and the upper housing 361 and between the air distribution plate 38 and the lower housing 362. The air distribution plate 38 is capable to further adjust the directions of the airflows from the air outlet 302, and is capable to prevent the vane assembly 31 from being directly touched from the outside, thereby improving the safety performance of the air outlet device 3.

It should also be understood that if the air outlet device 3 only has the second working mode, there may be no first idle angles and no second idle angles between these vane units 304 (that is, there are no first angles α1, second angles α2, and third angles α3 described above), as long as these vane units 304 have been pre-arranged according to that shown in FIG. 16a. In addition, a plurality of vanes may be also arranged on a shaft according to the diversion state shown in FIG. 16a. In this way, the second working mode of the air outlet device 3 may also be achieved when the shaft rotates.

### Second Embodiment

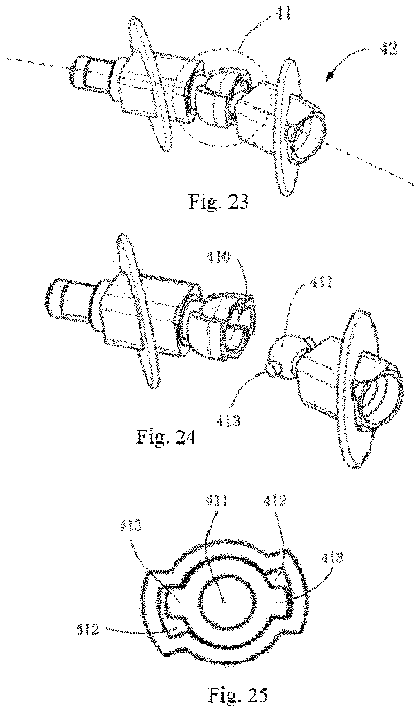

The overall structure of the air outlet device of the second embodiment is similar to that of the air outlet device 3 of the first embodiment. For simplicity, only the differences between the two are described herein. As shown in FIG. 23, in the vane assembly 42 of the air outlet device of the second embodiment, at least two adjacent vane units are connected by a universal joint 41. In other words, the universal joint 41 forms the clutch structure between the two adjacent vane units. In this way, the axis 313 of the vane assembly 31 includes a straight section and/or a curved section, so that the vane assembly 31 is not only applicable to an air outlet device with a straight air outlet, but also applicable to an air outlet device with a zigzag or curved air outlet, facilitating the user using the vane assembly.

Optionally, the straight section of the axis 313 may be obtained by the cooperation between the pin shaft and the engagement groove 314 as described above, and the curved section of the axis 313 may be obtained by one or more universal joints 41.

As shown in FIGS. 24 and 25, the universal joint 41 includes a ball socket 410 formed at a first end of a rotating shaft and a ball head 411 formed at a second end of another rotating shaft, and the ball head 411 is rotatably assembled in the ball socket 410.

Optionally, as shown in FIG. 24 and FIG. 25, the inner wall of the ball socket 410 is provided with two sliding grooves 412 opposite to each other radially, and the ball head 411 is provided with two guide rods 413 opposite to each other radially. The two guide rods 413 are respectively rotatably assembled in the corresponding sliding grooves 412, and the sliding grooves 412 have therein moving spaces for the corresponding guide rods 413. The moving space is used to form the idle angle between the two vane units, so as to facilitate adjustment of diversion states of the vane units.

### Third Embodiment

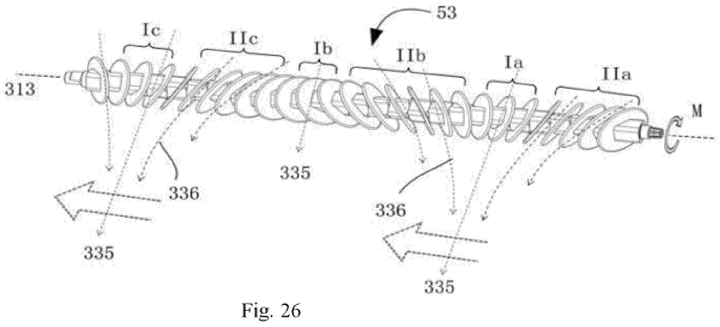

FIG. 26 schematically shows the vane assembly 53 of the air outlet device of the third embodiment. It should be understood that other structures of the air outlet device of the third embodiment are the same as those of the air outlet device 3 of the first embodiment, and the only difference is the vane assembly 53. For simplicity, only the vane assembly 53 is described here.

Compared with the vane assembly 31 of the air outlet device 3 of the first embodiment shown in FIG. 11, the vane assembly 53 of the air outlet device of the third embodiment includes more vane units. In this way, when the air outlet device of the third embodiment is in the second working mode, at a certain moment, the vane assembly 53 includes a plurality of first groups of vane units (such as the group Ia of vane units, the group Ib of vane units and the group Ic of vane units schematically shown in FIG. 26) providing the forward blowing airflow 335, and at the same time, the vane assembly 53 further includes a plurality of second groups of vane units (such as the group IIa of vane units, the group IIb of vane units and the group IIc of vane units schematically shown in FIG. 26) providing the obliquely blowing airflow 336. The first groups of vane units and the second groups of vane units are alternately distributed along the axis 313 of the vane assembly 53. Compared with the group Ia of vane units, the group IIa of vane units and the group IIb of vane units provide the obliquely blowing airflow 336 close to the adjacent forward blowing airflow 335. Compared with the group Ib of vane units, the group IIb of vane units and the group IIc of vane units provide the obliquely blowing airflow 336 away from the forward blowing airflow 335. Thus, different sections adjacent to each other of the vane assembly 53 are in different diversion states. For example, the section including the vane units Ia, IIa and IIb is in the vanes-convergence state, and the section including the vane units Ib, IIb and IIc is in the vanes-divergence state. As the vane assembly 53 rotates (the rotation direction M is shown in FIG. 26), the first groups of vane units providing the forward blowing airflow 335 move periodically along the axis 313 of the vane assembly 53, and the second groups of vane units providing the obliquely blowing airflow 336 also move periodically along the axis 313 of the vane assembly 53 accordingly. In this way, the passenger may feel a wave-like natural wind, thereby improving passenger comfort.

It should also be understood that when the vane assembly 53 rotates in the first rotation direction, the air outlet device of the third embodiment will be in the first working mode, and the diversion state of these vane units is similar to the diversion state of the vane assembly of the first embodiment, which is not described here. It should be noted that in the first working mode of the air outlet device 3 of the first embodiment, there are two groups of vane units. However, in the air outlet device of the third embodiment, the vane units may be divided into more groups.

### Fourth Embodiment

The air outlet device 6 of the fourth embodiment is substantially the same as the air outlet device 3 of the first embodiment. For simplicity, only the differences are described herein.

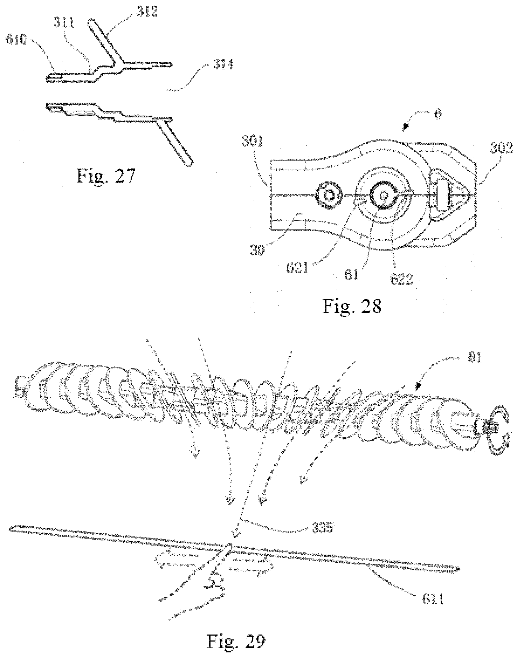

The first damper 32 between the vane unit 310 at the tail end of the vane assembly 31 and the housing 30 in the air outlet device 3 of the first embodiment is omitted, and second dampers 610 are provided in the clutch structures between adjacent vane units in the vane assembly 61 of the air outlet device 6 of the fourth embodiment. For example, as shown in FIG. 27, a second damper 610 is provided on the second end 322 of the rotating shaft 311, so that after the second end 322 is inserted into the corresponding engagement groove, the clutch structure has therein the second damper 610. As further shown in FIG. 28, a first limit block 621 is provided on the housing 30, and a second limit block 622 is provided on the vane unit at the tail end of the vane assembly 61. Both the first limit block 621 and the second limit block 622 extend transversely to the axis of the vane assembly 61.

By providing the second damper 610, when the vane assembly 61 rotates in the first rotation direction or the second rotation direction, as long as the second limit block 622 does not contact the first limit block 621, all the vane units rotate synchronously; in other words, the vane assembly 61 rotates as an integral unit. In this way, the air outlet device 6 is in an invariant working mode. For example, as shown in FIG. 29, the air outlet device 6 is in the second working mode. Of course, the vane assembly 61 may also be configured such that the air outlet device 6 is in the first working mode. When the vane assembly 61 rotates in the first rotation direction or the second rotation direction until the second limit block 622 contacts the first limit block 621, if the first idle angle and/or the second idle angle described above exists between the adjacent vane units 310, the adjacent vane units 310 may rotate relative to each other to cause their arrangements to be gradually changed, and if the first idle angle and/or the second idle angle described above does not exist between the adjacent vane units 310, the vane assembly 61 stops rotating. If necessary, the vane assembly 61 may be rotated in an opposite direction as a whole under the action of the second dampers 610 by controlling the motor to rotate reversely.

Optionally, as shown in FIG. 29, the air outlet device 6 may further include a touch panel 611. In a condition that the air outlet device 6 is in the second working mode, when the user touches the touch panel 611, the forward blowing airflow 335 generated by the vane assembly 61 is positioned to a position indicated by the touch position. When the touch position is shifted, the vane assembly 61 can be controlled to rotate in the first rotation direction or in the second rotation direction (for example, this may be achieved by changing the rotation direction of the motor in response to the shift of the touch position, which is easily achieved by those skilled in the art), so that the forward blowing airflow 335 generated by the vane assembly 61 is shifted to a position indicated by the touch position after shifted. In this way, the user is able to regulate the airflows from the air outlet device 6 more accurately, which helps to further improve the passenger comfort.

### Fifth Embodiment

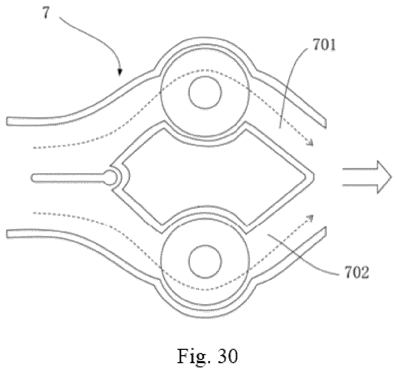

FIG. 30 schematically shows the structure of the air outlet device 7 of the fifth embodiment. As shown in FIG. 30, a first air duct 701 and a second air duct 702 are formed in the housing 30. Each of the first air duct 701 and the second air duct 702 is provided with the vane assembly 31 mentioned in any one of the first embodiment to the fourth embodiment. In this condition, the air outlet device 7 includes two air outlets respectively corresponding to the first air duct 701 and the second air duct 702. Thus the effect of using one air outlet device 7 to generate airflows in more directions is achieved. Other components (e.g., a display screen) may be disposed or integrated between the two air outlets. In this way, the components and the air outlet device 7 are combined as a single unit, facilitating its installation in the vehicle 1.

In addition, in the air outlet device 7 of the fifth embodiment, the vane assemblies in different air ducts may be independently driven by respective motors, or may be driven by a common motor.

In other embodiments, the housing 30 may also be provided with more air ducts, and each of the air ducts is provided with the vane assembly mentioned in any one of the first embodiment to the fourth embodiment, which will not be described in detail here.

It is noted that this invention (e.g., the inventive concepts, etc.) has been described in the specification and/or illustrated in the drawings of this patent document according to exemplary embodiments; the embodiments of this invention are set forth by way of example only, and are not intended as limitations on the scope of the invention. The structure and/or arrangement of the elements of the inventive concepts embodied in the disclosure as described in the specification and/or illustrated in the drawings are illustrative only. Although exemplary embodiments of the invention have been described in detail in this patent document, those of ordinary skill in the art will readily appreciate that equivalents, modifications, variations, etc. to the subject matter of the exemplary embodiments and alternative embodiments are possible and are considered to be within the scope of the invention; all such subject matter (e.g., modifications, variations, embodiments, combinations, equivalents, etc.) is intended to be encompassed within the scope of the invention. It should also be noted that various/other modifications, variations, substitutions, equivalents, changes, omissions, and the like can be made in the configuration and/or arrangement of the exemplary embodiments (e.g., in terms of concepts, designs, structures, arrangements, forms, assemblies, constructions, means, functions, systems, processes/methods, steps, order of process/method steps, operations, operating conditions, performance, materials, compositions, combinations, etc.) without departing from the scope of the invention; and all such subject matter (e.g., modifications, variations, embodiments, combinations, equivalents, etc.) is intended to be included within the scope of the invention. The scope of the invention is not intended to be limited to the subject matter (e.g., the details, structures, functions, materials, acts, steps, sequences, systems, results, etc.) described in the specification and/or figures of this patent document. It is appropriate that the claims of this patent document be construed to cover the full breadth of the subject matter of the present disclosure (e.g., including any and all such modifications, variations, embodiments, combinations, equivalents, etc.); it is to be understood that the terminology used in this patent document is intended to provide a description of the subject matter of the exemplary embodiments and is not intended to limit the scope of the present disclosure.

It should also be noted that, in accordance with exemplary embodiments, the invention can comprise conventional techniques (e.g., techniques embodied in, and/or integrated with, exemplary embodiments, modifications, variations, combinations, equivalents), or can comprise any other suitable technique (now and/or in the future) having the capability to perform the functions and processes/operations described in the specification and/or illustrated in the drawings. All such techniques, e.g., technologies implemented in examples, adaptations, variations, combinations, equivalents, etc., are considered to be within the scope of the invention of this patent document.

### List of reference numerals:

1 vehicle
2 instrument cover
21 column
3 air outlet device of the first embodiment
6 air outlet device of the fourth embodiment
7. air outlet device of the fifth embodiment
30 housing
301 air inlet
302 air outlet
303a first transition vane unit
303b second transition vane unit
304 driven vane unit
304a downstream driven vane unit adjacent to the active vane unit
304b upstream driven vane unit adjacent to the first transition vane unit
305 active vane unit
306 first group of vane units
307 second group of vane units
310 vane unit
31 vane assembly of the air outlet device of the first embodiment
311 rotating shaft
312 vane
313 axis
314 engagement groove
32 first damper
321 first end of the rotating shaft
322 second end of the rotating shaft
324 notch
325 boss
326 first radial edge
327 second radial edge
331 first engagement surface
332 second engagement surface
333 third engagement surface
334 fourth engagement surface
335 forward blowing airflow
336 obliquely blowing airflow
337 converging airflow
338 diverging airflow
36 air directing vane
361 upper housing
362 lower housing
38 air distribution plate
381 first guiding surface
382 second guiding surface
41 universal joint
42 vane assembly of the air outlet device of the second embodiment
410 ball socket
411 ball head
412 sliding groove
413 guide rod
53 vane assembly of the air outlet device of the third embodiment
61 vane assembly of the air outlet device of the fourth embodiment
610 second damper
611 touch panel
621 first limit block
622 second limit block
701 first air duct
702 second air duct

## Claims

1. An air outlet device, comprising:
a housing comprising an air inlet and an air outlet; and
a vane assembly disposed inside the housing and extending along a length direction of the air outlet, wherein the vane assembly comprises a plurality of vane units connected to each other in series, and the plurality of vane units are adapted to rotate synchronously around an axis of the vane assembly, or at least some of the vane units rotate independently around the axis of the vane assembly relative to remaining vane units.

2. The air outlet device according to claim 1, wherein each of the vane units comprises a rotating shaft and at least one vane inclined relative to the rotating shaft.

3. The air outlet device according to claim 2, wherein each of the vane units is integrally formed.

4. The air outlet device according to claim 1, wherein the air outlet device further comprises a first damper arranged between a vane unit at a tail end of the vane assembly and the housing, and friction force between the first damper and the housing is greater than transmission resistance between any two adjacent vane units.

5. The air outlet device according to claim 2, wherein the axis of the vane assembly comprises a straight section and/or a curved section.

6. The air outlet device according to claim 5, wherein in the straight section, the rotating shafts of the plurality of vane units are connected in series and arranged collinearly.

7. The air outlet device according to claim 5, wherein in the curved section, the rotating shafts of at least two of the vane units are connected to each other through a universal joint.

8. The air outlet device according to claim 7, wherein the universal joint comprises a ball socket formed on the rotating shaft of one of the two vane units and a ball head formed on the rotating shaft of the other of the two vane units, and the ball head is rotatably assembled in the ball socket.

9. The air outlet device according to claim 8, wherein an inner wall of the ball socket is provided with two sliding grooves opposed to each other radially, and the ball head is provided with two guide rods opposed to each other radially; and wherein the guide rods are rotatably assembled in the corresponding sliding grooves respectively.

10. The air outlet device according to claim 2, wherein the air outlet device further comprises a plurality of second dampers, and each of the second dampers is arranged between the rotating shafts of two adjacent vane units, so that the plurality of vane units are adapted to rotate synchronously.

11. The air outlet device according to claim 1, wherein the air outlet device further comprises a motor, and the vane assembly is driven by the motor to rotate.

12. The air outlet device according to claim 2, wherein the air outlet device further comprises a plurality of clutch structures, and each of the clutch structures is connected between two adjacent vane units and is configured to have an engaged state and a disengaged state; and wherein the clutch structure is in the engaged state, an upstream vane unit drives an adjacent downstream vane unit to rotate synchronously, and when the clutch structure is in the disengaged state, the upstream vane unit rotates independently relative to the adjacent downstream vane unit.

13. The air outlet device according to claim 12, wherein each of the clutch structures comprises a first engagement surface, a second engagement surface, a third engagement surface corresponding to the first engagement surface and a fourth engagement surface corresponding to the second engagement surface; and wherein in the engaged state, the first engagement surface and the third engagement surface are abutted against each other or the second engagement surface and the fourth engagement surface are abutted against each other, and in the disengaged state, the first engagement surface is spaced from the third engagement surface, and the second engagement surface is spaced from the fourth engagement surface.

14. The air outlet device according to claim 13, wherein the first engagement surface and the second engagement surface are formed on the rotating shaft of one of the two adjacent vane units, and the third engagement surface and the fourth engagement surface are formed on the rotating shaft of the other of the two adjacent vane units.

15. The air outlet device according to claim 14, wherein an end of the rotating shaft of one of the two adjacent vane units is provided with a pin shaft extending axially, a boss is configured on a circumferential side wall of the pin shaft, and two radial surfaces of the boss respectively form the first engagement surface and the second engagement surface; and
wherein an end of the rotating shaft of the other of the two adjacent vane units is provided with an engagement groove matched with the pin shaft, a notch matched with the boss is configured on an inner wall of the engagement groove, and two radial surfaces of the notch respectively form the third engagement surface and the fourth engagement surface.

16. The air outlet device according to claim 15, wherein a central angle corresponding to the notch is greater than a central angle corresponding to the boss.

17. The air outlet device according to claim 1, wherein an air directing vane is provided at the air inlet of the housing, and the air directing vane extends along a length direction of the air inlet and is adapted to swing along a width direction of the air inlet.

18. The air outlet device according to claim 1, wherein an air distribution plate is provided between the air outlet of the housing and the vane assembly, and the air distribution plate extends along the length direction of the air outlet and is spaced apart from the housing.

19. The air outlet device according to claim 1, wherein the housing is provided with a plurality of air ducts arranged in parallel, and each of the air ducts is provided therein with the vane assembly.

20. An air outlet device, comprising:
a housing comprising an air inlet and an air outlet; and
a vane assembly disposed inside the housing and extending along a length direction of the air outlet, wherein the vane assembly comprises a plurality of vane units connected in series;
wherein the plurality of vane units are adapted to rotate synchronously around an axis of the vane assembly, or at least some of the vane units rotate independently around the axis of the vane assembly relative to remaining vane units, so that the vane assembly is configured to have one or more of the following diversion states: a vanes-convergence state, a vanes-divergence state, and a vanes-forward diversion state.

21. The air outlet device according to claim 20, wherein each of the vane units comprises a rotating shaft and at least one vane inclined relative to the rotating shaft; and
wherein the air outlet device is configured to comprise a first working mode in which the plurality of vane units are divided into at least two groups, the vane units of the same group are configured to have the vanes parallel to each other, and the vane units of two adjacent groups are configured to have the vanes not parallel to each other, so that the vane units of the two adjacent groups are adapted to be in the vanes-convergence state to provide converging airflow, in the vanes-divergence state to provide diverging airflow, or in the vanes-forward diversion state to provide forward blowing airflow.

22. The air outlet device according to claim 20, wherein each of the vane units comprises a rotating shaft and at least one vane inclined relative to the rotating shaft; and
wherein the air outlet device is configured to comprise a second working mode in which the adjacent vane units are configured so that normal directions of the vanes are different from each other, causing at least some of the plurality of vane units to be adapted to provide one of forward blowing airflow and obliquely blowing airflow, and at least some others of the plurality of vane units to be adapted to provide the other of the forward blowing airflow and the obliquely blowing airflow;
wherein in the vanes-convergence state, the obliquely blowing airflow and the adjacent forward blowing airflow are close to each other, and in the vanes-divergence state, the obliquely blowing airflow and the adjacent forward blowing airflow are away from each other.

23. The air outlet device according to claim 22, wherein in the second working mode, the vane assembly comprises a plurality of first groups of vane units providing the forward blowing airflow and a plurality of second groups of vane units providing the obliquely blowing airflow, and the first groups of vane units and the second groups of vane units are alternately distributed along the axis of the vane assembly.

24. A vehicle, comprising an air outlet device according to any one of claims 1 to 19, or an air outlet device according to any one of claims 20 to 23.
